# EUROPÄISCHE PATENTSCHRIFT

(11) **EP 0 414 045 B1**
(45) Veröffentlichungstag und Bekanntmachung des Hinweises auf die Patenterteilung: **16.02.1994**
(21) Anmeldenummer: 90115205.8
(22) Anmeldetag: 08.08.1990
(51) Int. Cl.: A01M 7/00, A01C 23/04, B01D 19/00

(54) **Landwirtschafliche Feldspritze**
Agricultural field-crop sprayer
Pulvérisateur agricole

(30) Priorität: 23.08.1989 DE 3927808
(43) Veröffentlichungstag der Anmeldung: 27.02.1991
(73) Patentinhaber: Amazonen-Werke H. Dreyer GmbH & Co. KG, D-49205 Hasbergen (DE)
(72) Erfinder: Oberheide, Friedrich, D-4507 Hasbergen (DE); Bergmann, Thomas, D-4410 Warendorf (DE)

(56) Entgegenhaltungen:
- WO-A-89/10050
- DE-A- 2 315 434
- DE-A- 3 003 188
- DE-A- 3 428 540
- DE-A- 3 529 357
- DE-A- 3 824 744

## Beschreibung

Die Erfindung betrifft eine landwirtschaftliche Feldspritze gemäß Oberbegriff des Patentanspruches 1.

Feldspritzen mit einer derartigen Ausstattung sind in der landwirtschaftlichen Praxis bekannt.

Aus den verschiedensten Gründen kann es beispielsweise nach dem Reinigen des in der Saugleitung angeordneten Filters, nach dem Zudosieren von Chemikalien aus einem Einspülbehälter oder aber durch das fälschliche Ansaugen von Luft mittels der Flüssigkeitspumpe dazu kommen, daß sich im Flüssigkeitskreislauf der Feldspritze Lufteinschüsse befinden, welche den Aufbau des erforderlichen Betriebsdruckes für das Feldspritzensystem erheblich behindern.

Die deutsche Offenlegungsschrift 35 29 357 zeigt eine landwirtschaftliche Feldspritze mit einem Flüssigkeitstank, einer Flüssigkeitspumpe, die über eine Saugleitung die Flüssigkeit aus dem Flüssigkeitstank absaugt und über eine Druckleitung zu einer Dosierarmatur fördert. Von der Dosierarmatur zweigt eine Rückführleitung ab, die in den Flüssigkeitstank mündet. Weiterhin führen von der Dosierarmatur zu den Spritzdüsen mehrere Ausbringleitungen. Weiterhin ist in der Saugleitung ein Filter angeordnet.

Der Erfindung liegt daher die Aufgabe zugrunde, auf einfache Weise evtl. sich im Flüssigkeitskreislauf befindliche Lufteinschüsse aus der Flüssigkeit abzuscheiden, so daß innerhalb kürzester Zeit der Betriebsdruck für das Feldspritzensystem hergestellt wird.

Diese Aufgabe wird in erfindungsgemäßer Weise dadurch gelöst, daß in der Druckleitung im Bereich der Dosierarmatur eine den Flüssigkeitsstrom teilende Wand angeordnet ist, daß in Strömungsrichtung gesehen vor dem Beginn der Wand die Druckleitung einen Krümmungsbogen aufweist, daß auf der Krümmungsaußenseite des Krümmungsbogens die in der Saugleitung mündende Rückführleitung angeschlossen ist, während auf der Krümmungsinnenseite des Krümmungsbogens die in den Flüssigkeitstank mündende Leitung angeschlossen ist.

Infolge dieser Maßnahmen wird auf einfachste Weise eine Ausscheidung der sich im Flüssigkeitskreislauf der Feldspritze befindlichen Lufteinschlüsse herbeigeführt, wobei der von der Flüssigkeitspumpe geförderte, die Lufteinschlüsse beinhaltende Flüssigkeitsstrom aufgeteilt wird. Diese Aufteilung des Flüssigkeitsstromes mit den Lufteinschlüssen erfolgt nach einem in der Druckleitung angeordneten Krümmungsbogen, bedingt durch die von dem Krümmungsbogen auf den Flüssigkeitsstrom wirkenden Zentrifugalkräfte. Hierzu wird nun noch zusätzlich nach dem Krümmungsbogen eine den Flüssigkeitsstrom teilende Wand in der Druckleitung angeordnet. Durch den Einsatz dieser den Flüssigkeitsstrom teilenden Wand in Strömungsrichtung nach dem Krümmungsbogen wird die sich im Krümmungsbogen schon einstellende Aufteilung des Flüssigkeitsstromes mit Lufteinschlüssen, bedingt durch die im Krümmungsbogen auf den Flüssigkeitsstom wirkenden Zentrifugalkräfte, weiter aufrecht erhalten, wobei sich die Luftblasen nun entlang der Krümmungsinnenseite des Krümmungsbogens orientieren und die reine Flüssigkeit strömt entlang der Krümmungsaußenseite des Krümmungsbogens. Dadurch, daß auf der Krümmungsinnenseite des Krümmungsbogens die in dem Flüssigkeitstank mündende Leitung eingeschlossen ist, werden die aus dem Flüsssigkeitsstrom der Druckleitung ausgeschiedenen Lufteinschlüsse über diese Leitung in das Innere des Flüssigkeitstankes geleitet und steigen als Luftblasen in der sich im Flüssigkeitstank befindlichen Flüssigkeit empor, während auf der Krümmungsaußenseite des Krümmungsbogens die in der Saugleitung mündende Rückführleitung angeschlossen ist. Hierdurch gelangt der keine Lufteinschlüsse mehr aufweisende Flüssigkeitsstrom wieder in die Saugleitung zurück. Mittels dieser Ausscheidung der sich im Flüssigkeitsstrom der von der Förderpumpe geförderten Flüssigkeit befindlichen Lufteinschlüsse läßt sich ungehindert innerhalb kürzester Zeit der Betriebsdruck für das Feldspritzensystem aufbauen.

Durch die deutsche Offenlegungsschrift 34 28 540 ist eine Vorrichtung zur Erzeugung von Kavitation innerhalb einer strömenden Flüssigkeit bekannt. Diese Vorrichtung weist einen hoch angeordneten Behälter auf, an dem ein horizontaler Auslaufstutzen angeordnet ist, der über ein Rohrkrümmer in ein senkrechtes Fallrohr mündet. Unterhalb des Fallrohres ist ein Auffangbecken angeordnet. Vom Auffangbecken fördert eine Pumpe über eine Rückführleitung die Flüssigkeit wieder in den hoch angeordneten Behälter. Zwischen dem Rohrkrümmer und dem sich erweiternden senkrechten Rohrstück ist ein den gleichen Querschnitt wie der Rohrkrümmer aufweisendes Rohrstück angeordnet, welches die Kavitationsstrecke ist. Zwischen dem Rohrkrümmer und dem sich erweiternden senkrechten Rohrstück ist ein Ablenkblech mit einer Absaugdüse angeordnet. Über die Absaugdüse wird ein Teil der Flüssigkeit abgeschieden und zu einem Flüssigkeitsabscheider geleitet. Die im Flüssigkeitsabscheider abgeschiedene Flüssigkeit wird über eine Leitung dem Auffangbecken zugeführt.

Dadurch, daß zumindest das Anfangsende der Wand etwa parallel zu der Krümmung innerhalb der Druckleitung verläuft, wird gewährleistet, daß die bereits im Krümmungsbogen stattfindende Aufteilung des Flüssigkeitsstromes mit seinen Lufteinschlüssen derart aufrecht erhalten wird, daß die sich auf der Krümmungsinnenseite des Krümmungsbogens befindlichen Lufteinschüsse über die in den Flüssigkeitstank mündende Leitung in den Flüssigkeitstank geleitet werden, wobei der von den Lufteinschlüssen freie Flüssigkeitsstrom, bedingt durch die im Krümmungsbogen wirkenden Fliehkräfte, entlang der Krümmungsaußenseite des Krümmungsbogens fließt und so über die in die Saugleitung mündende Rückführleitung zurück in die Saugleitung gelangt. Diese Ausscheidung der Lufteinschlüsse aus dem Flüssigkeitskreislauf des von der Flüssigkeitspumpe geförderten Flüssigkeitsstromes ermöglicht den Aufbau des für das Feldspritzensystem erforderlichen Betriebsdruckes innerhalb kürzester Zeit.

Die Ausführung sieht in erfindungsgemäßer Weise vor, daß die den Flüssigkeitsstrom teilende Wand unmittelbar vor der Dosierarmatur in der Druckleitung angeordnet ist. Infolge dieser Maßnahme lassen sich die aus dem von der Flüssigkeitspumpe geförderten Flüssigkeitsstrom ausgeschiedenen Lufteinschlüsse auf einfachste Weise aus dem von der Flüssigkeitspumpe geförderten Flüssigkeitsstrom ableiten, wobei sich gleichzeitig eine einfache Montage für die Wand in der Druckleitung ergibt.

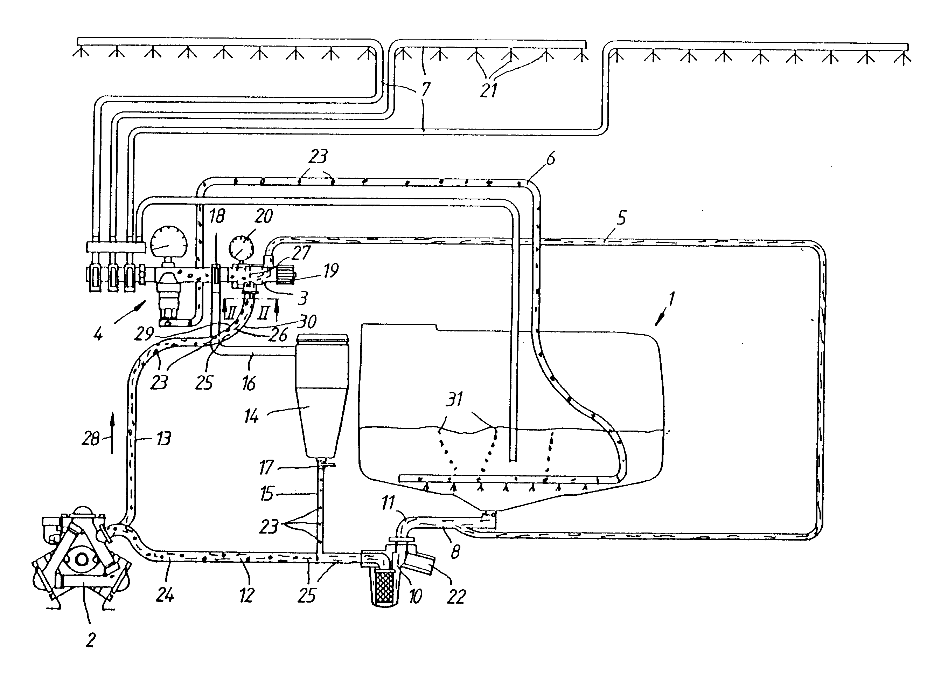

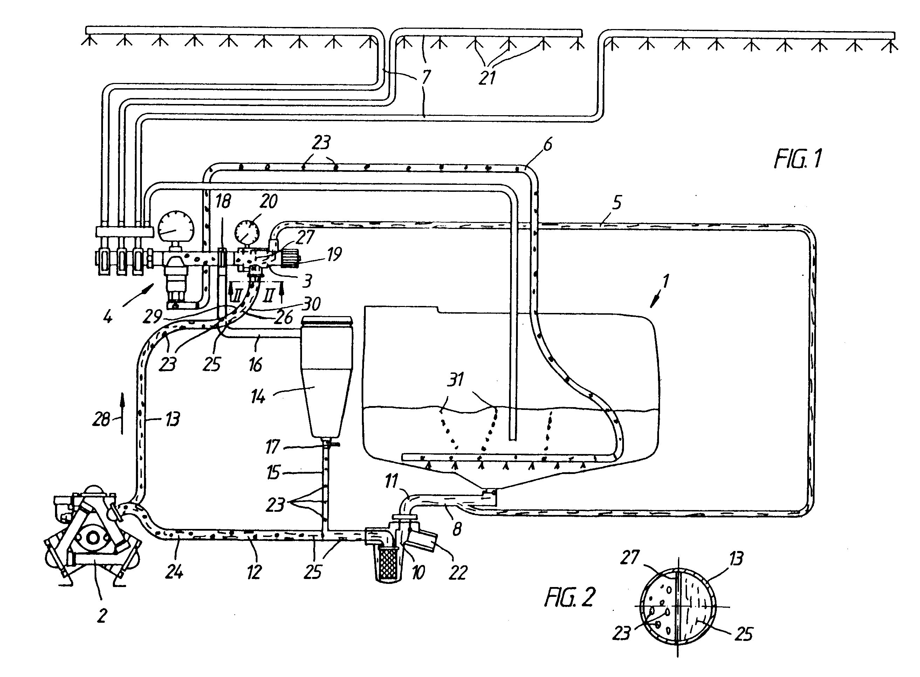

Weitere Einzelheiten der Erfindung sind der Beispielsbeschreibung und den Zeichnungen zu entnehmen. Hierbei zeigt
- Fig. 1: die schematische Darstellung des Flüssigkeitskreislaufes einer in erfindungsgemäßer Weise ausgerüsteten Feldspritze und
- Fig. 2: die vergrößerte Darstellung der Druckleitung mit der erfindungsgemäßen Wand zur Aufteilung des Flüssigkeitsstromes in der Ansicht II-II.

Die landwirtschaftliche Feldspritze weist den Flüssigkeitstank 1, die Flüssigkeitspumpe 2, das Druckregelventil 3, die Dosierarmatur 4, die Rücklaufleitungen 5, die Rührleitung 6 sowie die Spritzleitung 7 auf. An dem Boden des Flüssigkeitstanks 1 ist die Saugleitung 8 mit dem Filter 9, der den Dreiwegehahn 10 aufweist, angeschlossen. Die Saugleitung 8 besteht aus dem von dem Flüssigkeitstank 1 zum Filter 9 führenden Teilstück 11 und dem von dem Filter 9 zur Pumpe 2 führenden Teilstück 12. Von der Flüssigkeitspumpe 2 führt die Druckleitung 13 zu dem Druckregelventil 3 und der Dosierarmatur 4. Die Flüssigkeitspumpe 2 wird in bekannter und daher nicht näher dargestellter Weise von der Zapfwelle eines Ackerschleppers angetrieben. Des weiteren ist neben dem Flüssigkeitstank 1 der Einspülbehälter 14 befestigt. Dieser Einspülbehälter 14 weist die beiden Leitungen 15 und 16 auf, wobei sich in der Einschleusleitung 15 der Absperrhahn 17 befindet, und diese Einschleusleitung 15 in dem Teilstück 12 der Saugleitung 8 mündet. Die Leitung 16 des Einspülbehälters 14 ist als Zulaufleitung für den Einspülbehälter 14 ausgebildet und mit der Dosierarmatur 4 verbunden. Mittels dieser Leitung 16 läßt sich der zum Zudosieren von Chemikalien in den Flüssigkeitstank 1 der Feldspritze ausgebildete Einspülbehälter 14 zum Zwecke der Reinigung spülen, wenn das Ventil 18 der Dosierarmatur 4 entsprechend betätigt wird.

Die Pumpe 2 saugt über die Saugleitung 8 und den Filter 9 die Spritzflüssigkeit aus dem Flüssigkeitstank 1 an und drückt diese Flüssigkeit über die weiterführende Druckleitung 13 zu dem Druckregelventil 3. Entsprechend des über die Reglerschraube 19 eingestellten Spritzdruckes, der an dem Manometer 20 abzulesen ist, wird die gewünschte Flüssigkeitsmenge in bekannter Weise über die Dosierarmartur 4, die für die drei Teilbreiten vorgesehen ist, über die an der Dosierarmtur 4 angeschlossenen Leitungen 7 den Spritzdüsen 21 zugeführt. Die zuviel von der Pumpe 2 über die Druckleitung 13 zu dem Druckregelventil 3 geförderte Flüssigkeitsmenge wird über die an dem Druckregelventil 3 angeschlossene Rückführleitung 5 wieder in das Teilstück 11 der Saugleitung 8 eingespeist. In der Saugleitung 8 ist zwischen der Pumpe 2 und dem Flüssigkeitstank 1 ein weiterer Anschluß 22 vorgesehen, der mit einer nicht dargestellten Befülleitung zu verbinden ist.

Das Zudosieren von Chemikalien aus dem Einspülbehälter 14 erfolgt in das Teilstück 12 der Saugleitung 8, wenn der Absperrhahn 17 des Einspülbehälters 14 geöffnet wird. Während des Einspülens von Chemikalien durch die Saugleitung 8 wird ein Teil des von der Pumpe 2 geförderten Flüssigkeitsstromes über die Rührleitung 6 in das Innere des Flüssigkeitstanks 1 geleitet. Die Flüssigkeitspumpe 2 saugt nur soviel Flüssigkeit aus dem Vorratsbehälter 1, wie von der Rührleitung 6 wieder in den Flüssigkeitstank 1 zurückgeleitet wird. Die restliche, von der Pumpe 2 geförderte Menge gelangt über die Rücklaufleitung 5 wieder in das Teilstück 11 der Saugleitung 8. Durch das Absaugen der Chemikalien aus dem Einspülbehälter 14 kann es nun dazu führen, daß Lufteinschlüsse 23 in den Flüssigkeitskreislauf gelangen, so daß der von der Pumpe 2 angesaugte und geförderte Flüssigkeitsstrom 24 aus Flüssigkeitsteilchen 25 mit Lufteinschlüssen 23 besteht. Diese Lufteinschlüsse 23 behindern den Aufbau des für das Feldspritzensystem notwendigen Betriebsdruckes. Damit nun diese Lufteinschlüsse 23 aus dem Flüssigkeitskreislauf abgeschieden werden, weist die Druckleitung 13 den Krümmungsbogen 26 auf. Weiterhin ist in dem Bereich des Anschlusses der Druckleitung 13 an das Druckregelventil 3 die mit strichpunktierten Linien dargestellte Wand 27 in das Innere der Druckleitung 23 eingesetzt. Beim Transportieren des Flüssigkeitsstromes 24 von der Pumpe 2 in Strömungsrichtung 28 zu dem Druckregelventil 3 durchströmt der Flüssigkeitsstrom 24 zunächst den Krümmungsbogen 26, wobei der Flüssigkeitsstrom 24 mit den Lufteinschlüssen 23 beim Durchströmen des Krümmungsbogens 26 den Gesetzmäßigkeiten der Zentrifugalkräfte unterliegen. Dieses bedeutet, daß sich die Lufteinschlüsse 23 an der Krümmungsinnenseite 29 des Krümmungsbogens 26 anlegen, wobei die Flüssigkeitsteilchen 25 entlang der Krümmungsaußenseite 30 des Krümmungsbogens 26 entlang strömen. Die Wand 27 sorgt jetzt für eine Aufrechthaltung des bereits im Krümmungsbogen 26 aufgeteilten Flüssigkeitsstromes 24, wobei die Lufteinschlüsse 23 über die Rührleitung 6 in das Innere des Vorratsbehälters 1 gelangen und als Luftblasen 31 in der sich im Flüssigkeitstank befindlichen Flüssigkeit empor steigen. Die durch die Rücklaufleitung 5 in die Saugleitung 8 zurückgeleiteten Flüssigkeitsteilchen 25 sind nun frei von Lufteinschlüssen 23, so daß sich die durch den Einspülbehälter 14 in dem Flüssigkeitskreislauf angesaugten Lufteinschlüsse 23 sehr schnell aus dem Flüssigkeitskreislauf entfernen lassen, so daß der Aufbau des erforderlichen Betriebsdruckes für das Feldspritzensystem innerhalb kürzester Zeit erreicht wird, was sich sehr schnell mit der vorab beschreibenen Methode hinsichtlich des Aufteilens des Flüssigkeitsstromes und dem anschließenden Separieren der Lufteinschlüsse 23 aus der Flüssigkeit auf einfachste Weise mittels eines Krümmungsbogens 26 und durch den Einsatz einer den Flüssigkeitsstrom teilenden Wand 27 in die Druckleitung 13 herbeiführen läßt.

## Patentansprüche

1. Landwirtschaftliche Feldspritze mit einem Flüssigkeitstank (1), einer Flüssigkeitspumpe (2), die über eine Saugleitung (8) die Flüssigkeit aus dem Flüssigkeitstank (1) absaugt und über eine Druckleitung (13) zu einer Dosierarmatur (4) fördert, zumindest einer von der Dosierarmatur (4) abzweigenden und in der Saugleitung (8) mündenden Rückführleitung (6), zumindest eine von der Dosierarmatur (4) abzweigenden und im Flüssigkeitstank (1) mündenden Leitung (6), mehreren von der Dosierarmatur (4) zu Spritzdüsen (21) führenden Ausbringleitungen (7) sowie einem in der Saugleitung (8) angeordneten Filter (9) und insbesondere mit einer in der Saugleitung (8) mündenden und mit einem Absperrhahn (17) absperrbaren Einschleusleitung (15), dadurch gekennzeichnet, daß in der Druckleitung (13) unmittelbar vor der Dosierarmatur (4) eine den Flüssigkeitsstrom (24) teilende Wand (27) angeordnet ist, daß in Strömungsrichtung (28) gesehen vor dem Beginn der Wand (27) die Druckleitung (13) einen Krümmungsbogen (26) aufweist, daß auf der Krümmungsaußenseite (30) des Krümmungsbogens (26) die in der Saugleitung (8) mündende Rückführleitung (5) angeschlossen ist, während auf der Krümmungsinnenseite (29) des Krümmungsbogens (26) die in den Flüssigkeitstank (1) mündende Leitung (6) angeschlossen ist.

## Claims

1. Agricultural field sprayer, including a fluid storage tank (1), a fluid pump (2) which draws-in the fluid by suction from the fluid tank (1) via a suction pipe (8) and conveys it to a metering instrument (4) via a pressure line (13), at least one return pipe (5) which branches-off from the metering instrument (4) and extends into the suction pipe (8), at least one pipe (6) which branches-off from the metering instrument (4) and extends into the fluid tank (1), a plurality of distribution pipes (7) which extend from the metering instrument (4) to spray nozzles (21), a filter (9) which is disposed in the suction pipe (8) and, more especially, a charge pipe (15) which extends into the suction pipe (8) and can be shut-off by a shut-off tap (17), characterised in that a wall (27), which divides the flow of fluid (24), is disposed in the pressure pipe (13) immediately upstream of the metering instrument (4), in that the pressure line (13) has an arcuate portion (26) in front of the beginning of the wall (27), when viewed with respect to the direction of flow (28), in that the return pipe (5), which extends into the suction pipe (8), is connected on the outside (30) of the curve of the arcuate portion (26), while the pipe (6), which extends into the fluid tank (1), is connected on the inside (29) of the curve of the arcuate portion (26).

## Revendications

1. Pulvérisateur à usage agricole comprenant un réservoir à liquide (1), une pompe (2) qui aspire du liquide dans le réservoir (1) par une conduite d'aspiration (8) et le transfère à un robinet doseur (4) par une conduite de pression (13), au moins une conduite de retour (6) dérivant du robinet doseur (4) et débouchant dans la conduite d'aspiration (8), au moins une conduite partant du robinet doseur (4) et débouchant dans le réservoir à liquide (1), plusieurs conduites de distribution (7) reliant le robinet doseur (4) aux buses de pulvérisation (21) ainsi qu'un filtre (9) associé à la conduite d'aspiration (8) et notamment une conduite d'injection (15) débouchant dans la conduite d'aspiration (8) et susceptible d'être fermée par un robinet d'arrêt (17), pulvérisateur caractérisé en ce que la conduite de pression (13) comporte, directement avant le robinet doseur (4), une cloison (27) subdivisant le courant de liquide (24), et qui, prise dans la direction de l'écoulement (28), avant le début de la cloison (27), la conduite de pression (13) comporte un coude (26) et la conduite (6) débouche sur le côté extérieur (30) du coude (26), alors que sur la face intérieure (29) du coude (26) débouche la conduite (6) reliée au réservoir.
